# FASCICULE DE BREVET EUROPEEN

(11) **EP 3 460 489 B1**
(45) Date de publication et mention de la délivrance du brevet: **03.07.2024**
(21) Numéro de dépôt: 18196608.6
(22) Date de dépôt: 25.09.2018
(51) Int. Cl.: G01Q 60/28, G01Q 60/30

(54) **PROCÉDÉ DE COMMANDE D'UNE SONDE**
STEUERUNGSVERFAHREN EINER SONDE
METHOD FOR CONTROLLING A PROBE

(30) Priorité: 25.09.2017 FR 1758855
(43) Date de publication de la demande: 27.03.2019
(73) Titulaire: Concept Scientifique Instruments, 91940 Les Ulis (FR)
(72) Inventeur: PACHECO, Louis, 91260 La Ville du Bois (FR)
(74) Mandataire: Gevers & Orès

(56) Documents cités:
- WO-A2-2012/078415
- US-A- 5 229 606
- US-A1- 2006 113 469
- B. CAPPELLA ET AL: "Force-distance curves by atomic force microscopy", SURFACE SCIENCE REPORTS., vol. 34, no. 1-3, 1 janvier 1999 (1999-01-01), pages 1-104, XP055294207, NL ISSN: 0167-5729, DOI: 10.1016/S0167-5729(99)00003-5

## Description

L'invention concerne le domaine de la mesure de propriétés locales d'une surface.

Plus précisément, l'invention concerne le domaine des mesures de propriétés locales d'une surface à l'aide d'une pointe d'une sonde, cette sonde pouvant être par exemple une sonde micrométrique, une sonde nanométrique, ou encore un microscope à force atomique (généralement nommé sous l'acronyme MFA pour « *Microscopie à Force Atomique »*)*.*

Il existe différents modes d'utilisation d'un microscope MFA.

Ainsi, on peut utiliser un microscope MFA en mode dit « contact ». Dans ce mode, la pointe de la sonde ou du microscope MFA reste en contact avec la surface à analyser, à force constante.

Lorsqu'une sonde est utilisée en mode « contact », on peut effectuer une multitude de mesures dont, à titre non limitatif, les mesures de la résistance électrique locale de la surface, la mesure thermique locale, la mesure de dureté locale ou d'adhésion. A cet effet, on met à profit une pointe dont les propriétés sont en adéquation avec la mesure désirée, thermique, mécanique ou conductrice de l'électricité associée au microscope MFA.

En mode « contact », la pointe d'une sonde peut être maintenue au contact de la surface à analyser pour effectuer une mesure de la résistance électrique locale, quantifiable de façon précise grâce au maintien d'une force constante entre la pointe et la surface.

On pourra par exemple se référer au document FR 2 959 824. Ce document propose un appareil pour réaliser une mesure de la résistance électrique locale d'une surface.

En mode « contact », une pointe d'une sonde permet par ailleurs de déterminer la topographie de cette surface. En effet, la pointe est déplacée selon une direction donnée de la surface et différentes mesures locales sont effectuées pendant son déplacement afin d'obtenir la topographie de cette surface.

Cependant, l'utilisation de ce mode « contact » pour réaliser des mesures topographiques reste, en pratique, limité à l'analyse de surfaces dites « dures ». En effet, pour des surfaces dites « molles », par exemple des polymères ou des tissus biologiques, le frottement de la pointe qui est au contact de la surface analysée peut déformer cette surface, voire la détruire.

Un mode d'utilisation pouvant être utilisé pour analyser la topographie de tous types de surfaces, molles ou dures, est un mode dit « intermittent ».

En mode « intermittent », également dit mode « sans-contact », la pointe d'une sonde peut être contrôlée pour osciller à une fréquence proche de sa fréquence de résonnance.

Plus précisément, la pointe oscille à une amplitude prédéfinie. En s'approchant de la surface, cette amplitude diminue principalement dû au fait de forces longues distances et à l'interaction de la pointe avec la surface. Ce mode d'oscillation de la pointe permet de s'affranchir de problèmes de friction entre la pointe et la surface décrit dans le mode contact.

Le mode « intermittent » présente cependant plusieurs inconvénients, en particulier par rapport au mode « contact ».

L'un de ses inconvénients est qu'il ne permet pas de contact continu réel avec la surface de l'échantillon. Un autre de ses inconvénients est qu'il ne permet pas de maintenir ce contact à une force constante.

La mesure de propriétés locales de l'échantillon, telles que la résistance électrique locale ou thermique, dépend notamment du temps de contact entre la pointe et l'échantillon sur une plage de temps donné.

Or, dans le mode « intermittent », il n'y a pas de plage temporelle suffisante permettant à la sonde de rester au contact de la surface à analyser pour réaliser une mesure de cette résistance électrique locale, de surcroît à force constante pour qu'elle soit précise et fiable.

Dans le document US 2007/0114406, un appareil susceptible d'être associé à un microscope MFA est proposé, dans lequel la pointe oscille selon un mode dit « forcé et pulsé ».

Une mesure topographique peut être réalisée dans ce mode dit « forcé et pulsé ». Des surfaces de différents types, molles ou dures, peuvent également être analysées avec ce mode. Pour plus d'informations sur l'état de la technique, voir les documents US2006/113469A1, WO2012/078415A2, US5229606A et B. CAPPELLA ET AL: "Force-distance curves by atomic force microscopy",SURFACE SCIENCE REPORTS., vol. 34, no. 1-3, 1 janvier 1999 (1999-01-01), pages 1-104, XP055294207, NL.

Cependant, une mesure précise et fiable des propriétés locales d'un échantillon, par exemple de la résistance électrique locale, reste impossible avec ce mode « forcé et pulsé ». En effet, un maintien statique de la pointe grâce au maintien d'une force constante n'est pas possible dans ce cas.

La figure 1 du document US 2007/0114406 fournit plus précisément la courbe temps-force liée à la pointe. La pointe reste au contact avec la surface entre le point référencé 1 (t = 0,2 milliseconde) et le point référencé 4 (t - 0.27 milliseconde), mais avec une force variable qui ne permet pas des mesures fiables de propriétés électriques.

Après le point référencé 4 sur la figure 1 du document US 2007/0114406, la pointe oscille librement et permet une mesure utilisable pour la topographie de la surface. D'autres paramètres, tels que la rigidité locale ou l'adhésion locale peuvent être déduits de cette courbe entre les points référencés 1 et 4.

Ainsi, les modes connus de l'état de l'art permettent de réaliser plusieurs types de mesures quantitatives de manière séparée mais pas de manière simultanée. Ainsi, il n'est pas possible de réaliser à la fois des mesures mécaniques quantitatives et des mesures électriques quantitatives, ni de réaliser à la fois des mesures mécaniques quantitatives et des mesures thermiques quantitatives.

En d'autres termes, à ce jour, et à la connaissance du demandeur, il n'est pas possible de réaliser, de manière fiable, à la fois des mesures de propriétés locales d'une surface, par exemple une mesure thermique ou une mesure électrique telle qu'une mesure de la résistance électrique locale, et de propriétés mécaniques de cette surface, par exemple une mesure de la topographie ou de la force d'adhésion.

Pour répondre à cette demande, il serait intéressant de pouvoir réaliser de telles mesures, de manière fiable et au cours d'un même parcours de la pointe le long d'une ligne de déplacement sur la surface à analyser. Il en résulterait notamment des mesures mécanique et électrique, entre autres, qui seraient obtenues plus rapidement qu'à ce jour.

Un objet de l'invention est de répondre à cette demande.

A cet effet, l'invention propose un procédé de commande d'un actionneur pour une pointe d'une sonde, dans lequel un signal de commande, représentatif de la force appliquée par ladite pointe sur une surface d'un échantillon à analyser, comporte au moins un cycle défini successivement par :
- une première étape où la valeur dudit signal de commande décroît depuis une valeur maximum jusqu'à une valeur minimum de sorte à éloigner ladite pointe de la surface à analyser jusqu'à une distance prédéterminée dite hauteur de décollement;
- une deuxième étape où la valeur du signal de commande est maintenue constante à ladite valeur minimum de sorte à maintenir la pointe du à ladite hauteur de décollement ;
- une troisième étape où la valeur du signal de commande croît depuis la valeur minimum jusqu'à ladite valeur maximum de sorte à rapprocher la pointe de la surface à analyser jusqu'à la mise au contact de la pointe avec la surface ; et
- une quatrième étape où la valeur du signal de commande est maintenue constante à ladite valeur maximale de sorte à maintenir la pointe au contact de la surface à analyser ;
le signal de commande étant contrôlé entre deux étapes qui se succèdent pour éviter d'une part, toute oscillation de la pointe et pour d'autre part, maintenir une force constante entre la pointe et la surface à analyser lorsque la pointe est au contact de cette surface à analyser.

Par ailleurs, les procédés de commande d'une pointe d'une sonde connus de l'état de la technique permettent uniquement d'effectuer un balayage d'une surface de manière continue. Un désavantage de ces procédés de commande est que lorsque la pointe de la sonde est en contact avec la surface à analyser, la friction résultante de ce contact modifie les mesures effectuées par la sonde et peut fausser les résultats obtenus, notamment dans le cas de mesures électriques.

En outre, les modes connus de l'état de l'art ne permettent pas la réalisation de mesures quantitatives avec une vitesse de balayage importante, par exemple une vitesse de balayage d'une ligne par seconde ou plus.

La présente invention permet de réaliser des mesures sur tous types de surfaces, notamment des surfaces dites « dures » ou des surfaces dites « molles », souples ou encore fragiles. Ces types de surface comprennent des semi-conducteurs, des cellules solaires, des semi-conducteurs organiques, des polymères conducteurs, des polymères organiques, ou encore des polymères thermoplastiques comme du poly(méthacrylate de méthyle) (généralement nommé sous l'abrégé PMMA). L'invention permet aussi de réaliser des mesures sur des surfaces telles que des nanotubes de carbone ou des nanoparticules métalliques.

Grâce au maintien d'une force constante et à l'absence d'oscillation, la commande d'un actionneur pour une pointe d'un microscope à force atomique selon un mode de réalisation de la présente invention permet ainsi de réaliser des mesures quantitatives de type thermique, électrique, mécanique et des mesures topographiques d'un échantillon au cours d'au moins un cycle du procédé.

En particulier, l'invention permet la mise en oeuvre d'un nouveau mode « saut » apte à résoudre les inconvénients précités du mode « contact » et du mode « intermittent » pour l'analyse d'échantillons au moyen d'un microscope à force atomique.

Avantageusement, l'invention peut être mise en oeuvre pour commander une pointe d'une sonde soit lorsque la pointe est en contact avec la surface d'un échantillon à analyser, soit lorsque la pointe n'est pas en contact avec la surface de l'échantillon.

Avantageusement, l'invention permet de réaliser des mesures qui sont toutes quantitatives, ces mesures réalisées pouvant être à la fois des mesures mécaniques, des mesures électriques quantitatives et des mesures thermiques quantitatives.

Avantageusement, l'invention peut être mise en oeuvre avec une vitesse de balayage d'une ligne par seconde, et de plus d'une ligne par seconde.

Avantageusement, l'invention permet de supprimer les effets de friction lors de la réalisation de mesures sur des échantillons, sans les déplacer et en maintenant la mesure avec un contrôle sur la force appliquée sur ceux-ci. Ceci permet à l'invention de réaliser des mesures sur des échantillons de très petite taille et des échantillons biologiques, comme par exemple des bio-polymères, des macromolécules, des nanoparticules, des microparticules, des cellules, des bactéries ou de l'acide désoxyribonucléique.

Avantageusement, l'invention permet également de réaliser ces mesures sur des échantillons souples, fragiles et/ou délicats sans endommager la surface de ces échantillons.

Le procédé selon l'invention pourra également comprendre l'une au moins des caractéristiques suivantes, prises seules ou en combinaison :
- la première étape du cycle comprend une première sous-étape d'accélération progressive au cours de laquelle le signal de commande imprime à la pointe une vitesse croissante, et une troisième sous-étape de décélération progressive au cours de laquelle le signal de commande imprime à la pointe une vitesse décroissante ;
- la première étape du cycle comprend après la première sous-étape de la première étape du cycle et avant la troisième sous-étape de la première étape du cycle une deuxième sous-étape d'accélération nulle au cours de laquelle le signal de commande éloigne la pointe de l'échantillon avec une vitesse constante ;
- le signal de commande imprime à la pointe une vitesse non-nulle et inférieure à 400 micromètres par seconde au cours de la première étape du cycle ;
- la troisième étape du cycle comprend une première sous-étape d'accélération progressive au cours de laquelle le signal de commande imprime à la pointe une vitesse croissante et une troisième sous-étape de décélération progressive au cours de laquelle le signal de commande imprime à la pointe une vitesse décroissante ;
- la troisième étape du cycle comprend après la première sous-étape de la troisième étape du cycle et avant la troisième sous-étape de la troisième étape du cycle une deuxième sous-étape d'accélération nulle au cours de laquelle le signal de commande rapproche la pointe P de l'échantillon avec une vitesse constante ;
- le signal de commande imprime à la pointe une vitesse non-nulle et inférieure à 400 micromètres par seconde au cours de la troisième étape du cycle ;
- le signal de commande imprime à la pointe, au cours de l'une au moins des quatre étapes du cycle, un déplacement le long de la surface à analyser ;
- le signal de commande imprime à la pointe, au moins au cours de la deuxième étape du cycle, un déplacement le long de la surface à analyser ;
- un lissage du signal de commande entre les différentes étapes est réalisé par un filtre électronique.

L'invention sera mieux comprise et d'autres buts, avantages et caractéristiques de celle-ci apparaîtront plus clairement à la lecture de la description qui suit et qui est faite au regard des figures annexées, sur lesquelles :
- la figure 1 est un schéma général d'un dispositif conforme à l'invention;
- la figure 2 est un schéma représentatif de l'amplitude d'un signal de commande du mouvement de la pointe au cours des différentes étapes du procédé selon l'invention ;
- la figure 3 représente, sous forme d'organigramme, les principales étapes d'un procédé de commande d'une pointe selon un mode de réalisation de l'invention ;
- la figure 4 est un résultat de mesure d'un premier échantillon au moyen d'un procédé de commande selon un mode de réalisation de l'invention.

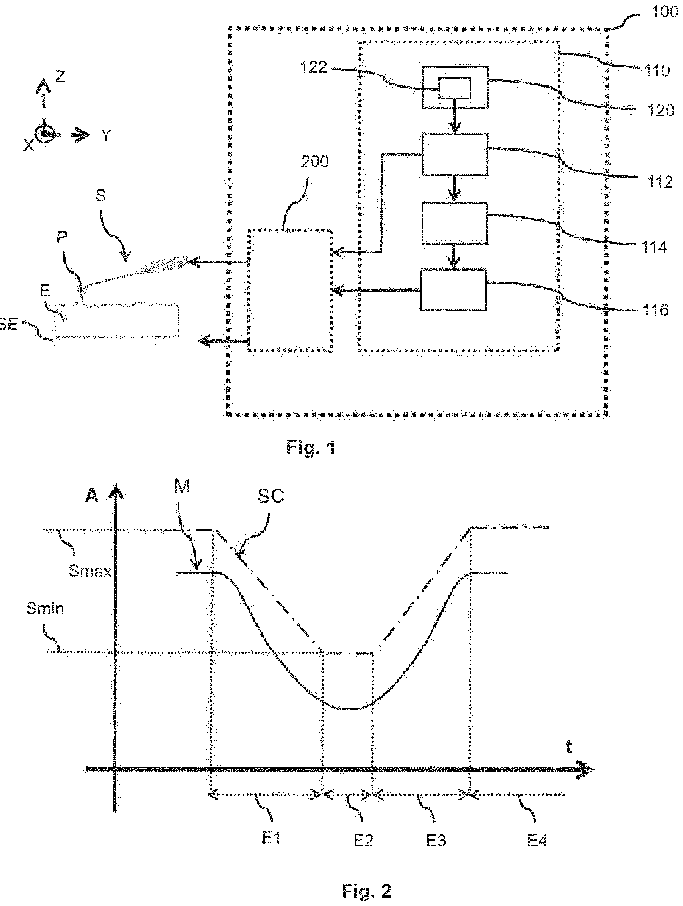

La figure 1 est un schéma général d'un dispositif 100 conforme à l'invention.

Plus précisément, la figure 1 illustre l'analyse de la surface d'un échantillon E à l'aide d'une sonde S aux échelles nanométrique et micrométrique, par exemple un microscope MFA. La sonde S comprend une pointe P et peut être commandée au moyen d'un procédé de commande selon un mode de réalisation de l'invention.

Pour la suite de la description, on comprendra que la surface de l'échantillon E définit un repère orthogonal XY dont les directions horizontales X et Y définissent un plan dit horizontal. Ce plan horizontal est perpendiculaire à une direction Z qui définit la direction verticale.

On comprendra également pour la suite de la description qu'un mouvement le long de la surface est un mouvement effectué dans le repère orthogonal XY, selon la direction X, selon la direction Y ou selon à la fois la direction X et la direction Y.

Selon un mode de réalisation de l'invention, le déplacement de la pointe P peut être commandé de sorte à déplacer cette pointe selon la direction X, la direction Y ou la direction Z ou selon plusieurs de ces directions.

Avantageusement, la pointe P peut être déplacée au-dessus de la surface de l'échantillon E pour balayer cette surface selon les directions horizontales X et Y.

Selon un mode de réalisation de l'invention, la pointe P peut être commandée de sorte à rester statique, par exemple pour immobiliser le déplacement de la sonde S selon l'une des trois directions orthogonales X, Y, Z, selon deux des directions X, Y, Z ou encore selon les trois directions X, Y, Z.

En variante, l'échantillon E peut être déplacé selon l'une ou plusieurs des trois directions orthogonales X, Y, Z au moyen d'un support mobile SE sur lequel est disposé cet échantillon.

Selon un mode de réalisation de l'invention, la hauteur de décollement de la pointe P est supérieure à zéro et est inférieure à 200 nanomètres. La hauteur de décollement de la point P correspond à la distance séparant la point P de la surface de l'échantillon E selon la direction verticale Z. Avantageusement, la hauteur de décollement de la pointe P peut être choisie comme étant supérieure à 40 nanomètres et inférieure à 150 nanomètres pour limiter l'adhésion de la pointe avec la surface d'un échantillon biologique lorsque le procédé selon l'invention est mis en oeuvre.

La constante de raideur de la pointe P peut être supérieure à un dixième de Newton par mètre et inférieure à plusieurs dizaines de Newtons par mètre. Avantageusement, la constante de raideur de la pointe P est égale à 40 Newtons par mètre pour analyser la surface d'un échantillon « souple » ou d'un échantillon fragile sans endommager la surface de cet échantillon lorsque la pointe P est en contact avec la surface de l'échantillon E.

La fréquence de résonance de la pointe P peut être supérieure à 10 kilohertz et inférieure à 1 mégahertz. Avantageusement, la fréquence de résonance de la pointe P est supérieure à 70 kilohertz et inférieure à 300 kilohertz pour analyser la surface d'un échantillon « souple » ou d'un échantillon fragile avec une sensibilité optimale.

Selon un mode de réalisation de la présente invention, la constante de raideur et la fréquence de résonance de la pointe P sont sélectionnés dans les intervalles précités pour éviter une adhésion trop importante entre la pointe P et la surface de l'échantillon E lorsque la pointe P est éloignée de cette surface. Avantageusement, le choix de ces valeurs permet également de limiter les frictions entre la pointe P et la surface d'un échantillon E lorsque la pointe P est mise en contact avec cet échantillon.

Selon un mode de réalisation de l'invention, la hauteur de décollement, la constante de raideur et/ou la fréquence de résonance de la pointe P peuvent être modifiés lors du cycle du procédé de commande, par exemple lors d'une étape donnée de ce cycle.

Par ailleurs, on comprendra que la pointe précédente n'est donnée qu'à titre d'exemple, et que toutes les pointes connues dans l'état de l'art peuvent convenir pour l'application de la présente invention.

Sur la figure 1, et selon un mode de réalisation de l'invention, le dispositif 100 est connecté électriquement à la sonde S. Le dispositif 100 comprend un module analogique 110 configuré pour commander la sonde S au moyen d'un signal de commande, par exemple une tension électrique, et/ou pour mesurer un signal électrique mesuré par la sonde S. En particulier, le déplacement de la sonde S peut être commandé.

Selon un mode de réalisation de l'invention, la déplacement de la sonde S peut être commandé de sorte à déplacer la sonde S selon la direction horizontale X, selon la direction horizontale Y, selon la direction verticale Z, ou selon plusieurs de ces directions simultanément.

Selon un mode de réalisation de l'invention, le module analogique 110 comprend une interface logicielle 120, cette interface logicielle pouvant comprendre un système 122 de contrôle et de mesure.

Selon un mode de réalisation de l'invention, le système 122 de contrôle et de mesure comprend une commande de contrôle du signal de commande transmis à la sonde S. Le système 122 de contrôle et de mesure permet de contrôler les directions et la vitesse de déplacement de la sonde S au moyen de ce signal de commande.

Selon un mode de réalisation de l'invention, le système 122 de contrôle et de mesure permet de contrôler les directions et la vitesse de déplacement de la sonde S au moyen de ce signal de commande.

En variante, le système 122 de contrôle et de mesure peut être utilisé pour déplacer l'échantillon E selon l'une ou plusieurs des directions X, Y et Z.

Le système 122 de contrôle et de mesure peut en outre permettre l'application d'un signal électrique, par exemple une tension électrique, entre la pointe P de la sonde S et l'échantillon E.

Selon un mode de réalisation de l'invention, le module analogique 110 que comprend le dispositif 100 comporte, outre l'interface logicielle 120, un processeur de signal numérique 112, une source de tension 114 et un filtre 116 connectés entre eux et configurés pour commander le déplacement de la pointe P selon une ou plusieurs directions. Ainsi, le dispositif 100 est configuré pour transmettre un signal de commande depuis le système 122 de contrôle et de mesure au processeur de signal numérique 112, puis à la source de tension 114 pour commander la production d'une tension électrique, puis au filtre 116.

Avantageusement, la source de tension 114 est une source de haute tension pouvant fournir une tension comprise entre une centaine de volts et plusieurs milliers de volts.

Avantageusement, le filtre 116 est un filtre passe-bande configuré pour éliminer les basses fréquences et/ou les hautes fréquences du signal électrique appliqué entre la pointe P de la sonde S et l'échantillon E.

Selon un mode de réalisation de l'invention, le module analogique 110 peut comprendre un ou plusieurs convertisseurs analogique-numérique.

Selon un mode de réalisation de l'invention, le dispositif 100 comprend un contrôleur 200 configuré pour mettre en oeuvre une commande de déplacement de la sonde S et/ou pour commander la réalisation d'une mesure par cette sonde S.

Selon un mode de réalisation de l'invention, le contrôleur 200 est connecté électriquement au module analogique 110 pour permettre la transmission d'un signal reçu du processeur de signal numérique 112 et/ou du filtre 116.

Le contrôleur 200 peut comprendre un moyen de contrôle, par exemple un processeur, configuré pour mettre en oeuvre les étapes d'un procédé selon un exemple de réalisation de l'invention.

Le contrôleur 200 peut être configuré pour mettre en oeuvre une commande de déplacement du support mobile SE à partir d'un signal de commande.

Selon un mode de réalisation de l'invention, le support mobile SE est configuré pour recevoir un signal de commande du contrôleur 200.

La sonde S peut être maintenue en contact avec la surface de l'échantillon E au moyen de l'application d'une force constante, de sorte à n'effectuer aucun balayage de la surface de l'échantillon E.

L'invention peut ainsi être utilisée en mode « statique » lorsque le déplacement de la pointe P est uniquement commandé selon la direction horizontale X ou selon la direction horizontale Y.

Avantageusement, le déplacement de la sonde S peut être immobilisé selon une ou plusieurs des trois directions X, Y, Z lorsque la pointe P est en contact avec la surface de l'échantillon E.

En variante, la sonde S peut être maintenue à une distance donnée de la surface de l'échantillon E sans subir de déplacement selon la direction Z. La sonde S peut être simultanément déplacée le long de la surface de l'échantillon E.

L'invention peut ainsi être utilisée en mode « séquentiel » lorsque le déplacement de la pointe P est uniquement commandé selon la direction horizontale X, selon la direction horizontale Y ou selon la direction verticale Z.

Avantageusement, la pointe P peut être maintenue statique ou effectuer un balayage de la surface de l'échantillon.

En variante, la pointe P peut être maintenue statique en contact ou non avec l'échantillon E lorsque la surface de l'échantillon E est déplacé selon l'une des trois directions orthogonales X, Y, Z, selon deux des directions X, Y, Z ou encore selon les trois directions X, Y, Z.

La figure 2 représente un exemple du mouvement de la pointe P que l'on peut obtenir lorsqu'un procédé de commande est mis en oeuvre selon un mode de réalisation de l'invention. Plus précisément, le signal de commande SC correspond à l'amplitude de la tension appliquée pour commander un actionneur de la sonde S afin de déplacer la sonde S et donc la pointe P à une distance prédéterminée au-dessus de la surface de l'échantillon E ou en un point au contact de celle-ci.

Pour la suite de la description, on comprendra que la valeur du signal de commande SC détermine ainsi le mouvement de la pointe P et est donc représentatif de ce mouvement.

La courbe M représente la déflection d'un levier d'un actionneur au cours d'une mesure MFA. Cet actionneur est par exemple un actionneur piézoélectrique configuré pour gérer les mouvements de la sonde S ou de la pointe P par rapport à l'échantillon. En particulier, la courbe M peut correspondre à l'amplitude du mouvement de la pointe P au cours du temps.

Selon un mode de réalisation de l'invention, la pointe P est initialement au contact de la surface de l'échantillon E à analyser.

Pendant la première étape E1, la pointe P est commandée par le signal SC pour décoller de la surface de l'échantillon E. Ce décollement s'effectue perpendiculairement par rapport à la surface de l'échantillon de sorte à éloigner la pointe P du premier point de la surface, sans déplacement latéral.

Le décollement de la pointe P au cours de la première étape E1 est effectué de manière contrôlée à l'aide du signal de commande SC. Ce contrôle permet d'éviter les oscillations naturelles de la pointe P, et permet incidemment d'éviter tout endommagement de la surface à analyser. En effet, lorsque la pointe P oscille, ce qui n'est pas le cas ici, l'oscillation naturelle de la pointe peut provoquer une mise en contact avec la surface.

Le signal de commande SC transmis à l'actionneur de la sonde S peut être un signal en tension de forme sinusoïdale, de forme semi-sinusoïdale, de forme rectangulaire, ou de tout autre type adapté à la mise en oeuvre de l'invention. La forme particulière du signal de commande SC permet d'obtenir une forme particulièrement avantageuse du déplacement de de la pointe P, et donc d'obtenir les avantages invoqués par l'invention.

Au cours de cette première étape E1, la pointe P décolle de la surface au cours d'une durée pouvant varier entre 100 microsecondes et 500 microsecondes. Pour un décollage de la pointe P jusqu'à une distance de décollement de 80 nanomètres, la pointe P décolle de la surface au cours d'une durée de l'ordre de 300 microsecondes.

Ce décollement s'effectue par une mise en mouvement de la pointe P au cours d'une phase d'accélération progressive permettant d'éviter une oscillation de la sonde S. Cette phase d'accélération progressive est mise en oeuvre par le contrôleur 200, et peut être d'une durée de l'ordre de 20 microsecondes.

Selon un mode de réalisation de l'invention, la mise en mouvement de la sonde S est réalisée en diminuant le signal de commande SC au cours d'une phase de décroissance, de sorte à éloigner la sonde S de l'échantillon E. Le signal de commande SC est ainsi diminué depuis une valeur maximale Smax jusqu'à atteindre une valeur minimale Smin.

Selon un mode de réalisation de l'invention, la valeur maximale Smax et la valeur minimale Smin sont des valeurs de tension électriques choisies dans une gamme de valeurs supérieures à 0 Volt et inférieures à 10 Volts par rapport à la tension électrique de l'échantillon E.

A titre d'exemple non limitatif, la valeur maximale Smax du signal de commande SC peut être de l'ordre de 3,5 Volts, et la valeur minimale Smin du signal de commande SC peut être de l'ordre de 2,5 Volts. Une décroissance contrôlée du signal de commande SC de 3,5 Volts à 2,5 Volts permet au dispositif 100 d'éloigner la sonde S à une distance d'environ 100 nanomètres, par exemple 80 nanomètres, de l'échantillon E. Cette décroissance contrôlée permet en outre de réduire le mouvement et l'oscillation d'une pointe P d'un microscope MFA dont les paramètres comme la constante de raideur, la fréquence de résonance, etc. sont sélectionnés pour analyser la surface d'un échantillon « souple » ou fragile.

Lors de la mise en oeuvre du procédé, la hauteur de décollement de la pointe P correspondant à la distance séparant la pointe P de l'échantillon E peut être sélectionnée de manière non limitative dans un intervalle compris entre 0 et 500 micromètres.

La distance définissant l'éloignement entre la pointe P et la surface à analyser est définie comme étant la hauteur de décollement du procédé de commande.

Selon un premier exemple d'application, la hauteur de décollement de la pointe P peut être sélectionnée dans un intervalle compris entre 1 nanomètre et 200 nanomètres pour des échantillons « souples », des échantillons fragiles ou encore des échantillons présentant des adhésions importantes.

Selon un autre exemple d'application, la hauteur de décollement de la pointe P peut être supérieure à 1 micromètre et inférieure à 50 micromètres pour analyser des échantillons biologiques.

La valeur du signal de commande SC permettant de maintenir la pointe P au contact de la surface à analyser à force constante est définie comme étant la valeur de consigne du procédé de commande.

A titre non limitatif, la hauteur de décollement de la pointe P peut être modifiée au cours de l'une ou de plusieurs des étapes du procédé.

Par ailleurs, le signal de commande SC de l'actionneur peut être décomposé en plusieurs sous-étapes pour contrôler l'accélération, la décélération et les vitesses de déplacement de l'actionneur, de la sonde S ou de la pointe P.

Avantageusement, le contrôle de l'accélération, de la décélération et les vitesses de déplacement permet d'amortir tout effet d'oscillation.

Pour ce faire, et selon un mode de réalisation de l'invention, la première étape E1 comprend les sous-étapes successives suivantes :
- une première sous-étape E11 d'accélération progressive destinée à éviter une accélération brutale du mouvement de l'actionneur ou de la sonde S, à éviter une oscillation du microscope MFA ou d'un levier déplaçant ce microscope MFA, et à éviter l'apparition de phases transitoires perturbantes et retardant la stabilisation de la pointe P ; cette phase E11 est typiquement de l'ordre de 20 microsecondes et peut être mise en place au moyen d'un algorithme du processeur que comprend le contrôleur 200 ;
- une troisième sous-étape E13 de décélération progressive destinée à ralentir le mouvement de l'actionneur ou de la sonde S pour arrêter son mouvement tout en évitant l'apparition de perturbations ou d'oscillations dues à un arrêt brutal du mouvement ; cette phase E13 est typiquement de l'ordre de 20 microsecondes et peut également être mise en place au moyen d'un algorithme du processeur compris dans le contrôleur 200.

Selon un exemple de réalisation de l'invention, lorsque la première sous-étape E11 est mise en oeuvre, une accélération progressive de la pointe P est commandée de sorte à augmenter la vitesse de celle-ci depuis une vitesse nulle jusqu'à une vitesse de 300 micromètres par seconde au cours d'un intervalle de temps égal à 20 microsecondes, cette accélération étant de l'ordre de 15 mètres par seconde au carré.

Selon un exemple de réalisation de l'invention, lorsque la troisième sous-étape E13 est mise en oeuvre, une décélération progressive de la pointe P est commandée de sorte à diminuer la vitesse de celle-ci depuis une vitesse de 300 micromètres par seconde jusqu'à une vitesse nulle au cours d'un intervalle de temps égal à 20 microsecondes, cette décélération étant de l'ordre de -15 mètres par seconde au carré.

La première étape E1 peut également comprendre, après la première sous-étape E11 et avant la troisième sous-étape E13, une deuxième sous-étape E12 d'accélération nulle au cours de laquelle la pointe P est éloignée de l'échantillon E avec une vitesse constante ; selon un mode de réalisation de l'invention, la valeur de la vitesse constante commandée de la pointe P est supérieure à 200 micromètres par seconde et inférieure à 400 micromètres par seconde ; à titre non limitatif, la vitesse commandée de la pointe P est adaptée en fonction de la distance à parcourir et en fonction du temps de mesure ; par exemple, pour déplacer la pointe P de 60 nanomètres sur un intervalle de temps égal à 260 microsecondes, la vitesse de déplacement de la pointe P est ajustée pour être de l'ordre de 240 micromètres par seconde.

A l'issue de la première étape E1, la pointe P se situe à une distance prédéterminée de la surface de contact et au niveau du premier point de mesure.

Suite à la première étape E1, une deuxième étape E2 est mise en oeuvre, au cours de laquelle la valeur du signal de commande SC est maintenue constante à la valeur minimum Smin de sorte à maintenir la pointe P à une hauteur de décollement fixée.

Selon un mode de réalisation de l'invention, une ou plusieurs mesure peuvent être réalisées lors de la deuxième étape E2 à l'aide de pointe P. Notamment, des mesures peuvent être réalisées à différentes distances d'éloignement de la surface de l'échantillon E. A titre non limitatif, il est ainsi possible de mesurer la résistance électrique, l'impédance électrique, la capacité électrique ou encore la température de l'échantillon E à une distance donnée. Avantageusement, une mesure réalisée sans contact entre la pointe P et l'échantillon E permet de caractériser le bruit thermique ou le bruit électrique dans l'environnement de l'échantillon E. Lors de la deuxième étape E2, on peut donc par exemple réaliser une mesure de la capacité d'environnement.

Ces mesures de type mécanique ou de type électrique peuvent être effectuées lorsque la pointe P est située à différentes distances par rapport à la surface de l'échantillon E, ou lorsque la pointe est en contact avec la surface de cet échantillon E.

Au cours de la deuxième étape E2, la pointe P est maintenue à une distance constante de la surface de l'échantillon pendant un laps de temps prédéterminé. Ce laps de temps peut être de plusieurs nanosecondes ou de plusieurs microsecondes, par exemple 70 microsecondes, en fonction de la nature de la mesure à réaliser.

Selon un mode de réalisation de l'invention, un déplacement latéral de la sonde S et/ou de la pointe P peut être réalisé vers un autre point de mesure. La position de l'échantillon E peut également être modifiée par rapport à la position de la pointe P de sorte à définir un nouveau point de mesure.

A l'issue de cette deuxième étape E2, une troisième étape E3 est mise en oeuvre au moyen d'un signal SC pour rapprocher la pointe P de la surface de l'échantillon E. Ce rapprochement s'effectue perpendiculairement par rapport à la surface de, sans déplacement latéral.

Là également, comme pour la première étape, le contrôle du mouvement de la pointe P est réalisé de sorte que la pointe ne présente pas d'oscillation naturelle.

Lors de cette étape, on peut réaliser une mesure mécanique, par exemple une mesure de dureté.

Il est également envisageable de mesurer la variation d'impédance liée à la modification de la distance entre la pointe et la surface de contact.

Le contrôle du mouvement d'approche permet donc à la pointe de se poser au contact de la surface, sans que l'interaction entre la pointe et la surface ne provoque une oscillation de la pointe ou une détérioration de la surface.

Incidemment, cela évite d'abimer la surface de contact.

La mise en contact de la pointe avec la surface, contrôlée, évite en effet que la surface soit endommagée, en l'occurrence au niveau d'un deuxième point de mesure.

Selon un mode de réalisation de l'invention, la troisième étape E3 comprend une première sous-étape E31 et une troisième sous-étape E33, similaires à la première sous-étape E11 et à la troisième sous-étape E13 respectivement.

Selon un exemple de réalisation de l'invention, une accélération progressive de la pointe P est commandée au cours de la première sous-étape E31 de sorte à augmenter la vitesse de celle-ci depuis une vitesse nulle jusqu'à une vitesse de 300 micromètres par seconde au cours d'un intervalle de temps égal à 20 microsecondes ; une décélération progressive de la pointe P est commandée au cours de la troisième sous-étape E33 de sorte à diminuer la vitesse de celle-ci depuis une vitesse de 300 micromètres par seconde jusqu'à une vitesse nulle au cours d'un intervalle de temps égal à 20 microsecondes.

Selon un exemple de réalisation de l'invention, lorsque la troisième sous-étape E13 est mise en oeuvre, une décélération progressive de la pointe P est commandée de sorte à diminuer la vitesse de celle-ci depuis une vitesse de 300 micromètres par seconde jusqu'à une vitesse nulle au cours d'un intervalle de temps égal à 20 microsecondes, cette décélération étant de l'ordre de -15 mètres par seconde au carré.

La troisième étape E3 peut également comprendre, après la première sous-étape E31 et avant la troisième sous-étape E33, une deuxième sous-étape E32 d'accélération nulle au cours de laquelle la pointe P est rapprochée de l'échantillon E avec une vitesse constante

Le signal de commande SC transmis à l'actionneur de la sonde S lors de la troisième étape E3 peut être de même forme que la forme du signal transmis lors de la première étape E1, ou être d'une forme différente. Des signaux de forme différentes permettent de réaliser différentes combinaisons de déplacements et de mesure de la sonde S en fonction de la nature de l'échantillon E à analyser.

Selon un mode de réalisation de l'invention, la mise en mouvement de la sonde S est réalisée en augmentant le signal de commande SC au cours d'une phase de croissance pour rapprocher la sonde S de l'échantillon E. Le signal de commande SC est ainsi augmenté depuis la valeur minimale Smin, par exemple 2,5 Volts, jusqu'à atteindre la valeur maximale Smin, par exemple 3,5 Volts.

Suite à la troisième étape E3, une quatrième étape E4 est mise en oeuvre pour maintenir la point P au contact de la surface de l'échantillon E à analyser avec une force constante et pendant un laps de temps prédéterminé.

Le contact entre la pointe et la surface s'effectuant à force constante, ceci permet une mesure fiable et quantitative des propriétés électriques locales de l'échantillon E, par exemple de la résistance de contact, au niveau de ce deuxième point de mesure.

Différentes mesures peuvent donc être effectuées au premier point de mesure et au deuxième point de mesure, parmi lesquelles une mesure topographique.

Selon un mode de réalisation de l'invention, le procédé de commande imprime à la pointe P, au cours de la quatrième étape E4, un déplacement le long de la surface à analyser tout en maintenant cette pointe au contact de la surface. Ainsi, le cycle du procédé de commande imprime à la pointe P un déplacement le long de la surface simultanément avec un maintien de la pointe P au contact de la surface. Ceci permet d'immobiliser le déplacement de la pointe P le long de la surface, notamment le long de la direction X et/ou de la direction Y. Avantageusement, ce mode de réalisation limite les effets de friction entre la pointe P et la surface de l'échantillon E, qui sont susceptibles de fausser les mesures acquises par la sonde S.

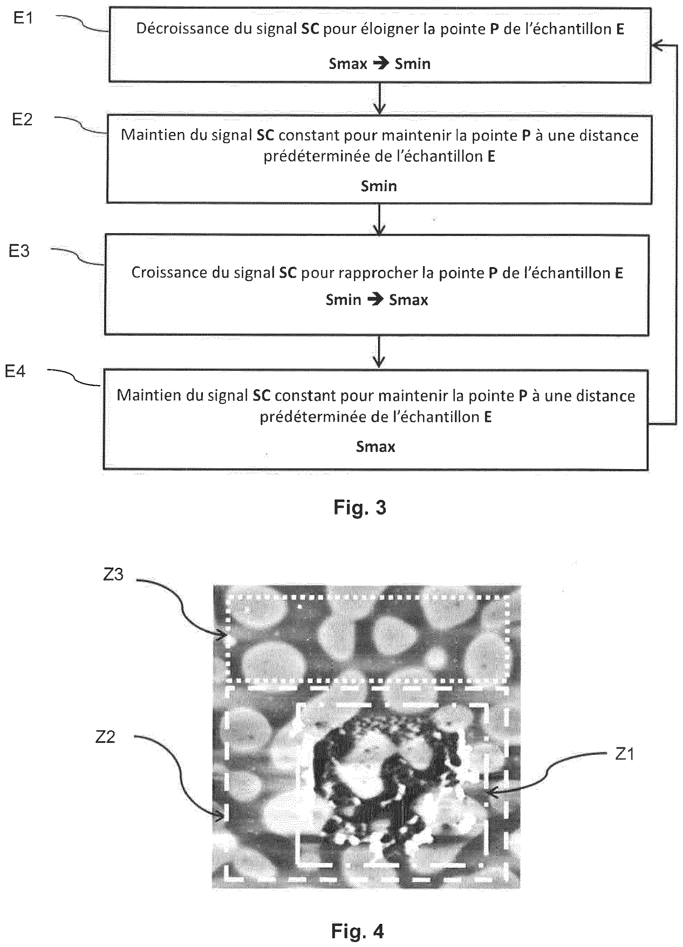

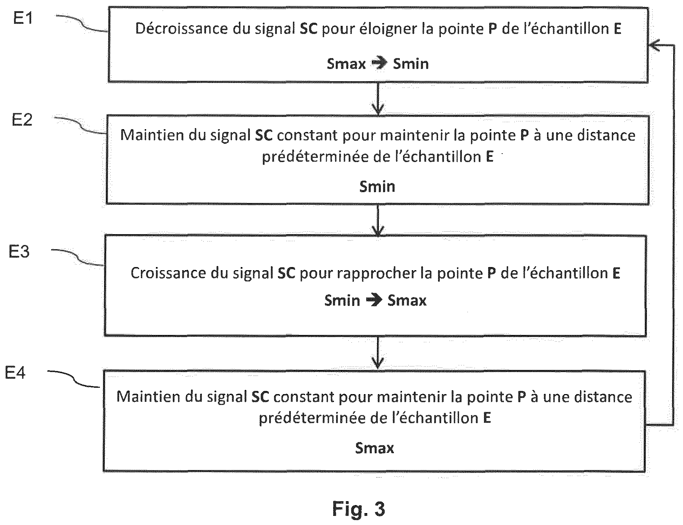

En référence à la figure 3, on reprend ici les étapes du procédé de commande décrit selon un mode de réalisation de l'invention, lorsque ce procédé est mis en oeuvre. A titre d'exemple, la sonde S est initialement située au contact de l'échantillon E.

Au cours de la première étape E1, le procédé de commande met en oeuvre une décroissance du signal de commande SC depuis une valeur maximale Smax jusqu'à une valeur minimale Smin. Sous l'effet de ce signal de commande décroissant, la sonde S est éloignée de l'échantillon E à une distance donnée.

Au cours de la deuxième étape E2, le procédé de commande maintient constant, à la valeur Smin, le signal de commande SC de sorte à maintenir la sonde S à la même distance donnée de l'échantillon E.

Au cours de la troisième étape E3, le procédé de commande met en oeuvre une croissance du signal de commande SC depuis la valeur minimale Smin jusqu'à la valeur maximale Smax. Sous l'effet de ce signal de commande croissant, la sonde S est rapprochée de l'échantillon E à une distance donnée, jusqu'à atteindre éventuellement le contact.

Au cours de la quatrième étape E4, le procédé de commande maintient constant, à la valeur Smax, le signal de commande SC de sorte à maintenir la sonde S à la même distance de l'échantillon E, typiquement au contact de celui-ci.

Selon un mode de réalisation de l'invention, le procédé de commande réalise une ou plusieurs mesures au cours de l'une quelconque des étapes précédemment décrites. Le cycle d'étapes E1, E2, E3 et E4 permet ainsi de réaliser plusieurs mesures, notamment sur des surfaces molles, par exemple en matière plastique ou autre, sans les endommager.

Selon un mode de réalisation de l'invention, le procédé de commande répète le cycle des étapes E1, E2, E3 et E4 suite à la quatrième étape E4. Le mouvement de de la pointe P se présente ainsi sous la forme d'un cycle, qui est répété autant de fois que souhaité par l'utilisateur. Le signal de commande SC résultant permet ainsi de contrôler un amortissement de la pointe P afin d'éviter une oscillation naturelle de la pointe.

Il convient de noter que le moment où le déplacement de la pointe P est réalisé pour passer d'un point de mesure à un autre peut être choisi en fonction des mesures électrique et mécanique que l'on souhaite obtenir et/ou de la vitesse d'exécution souhaitée et/ou encore, en fonction du type de surface analysée.

Par exemple, il est possible de déplacer la pointe P au cours de la quatrième étape E4 après avoir réalisé la mesure électrique. Dans ce cas, la pointe P est au contact de la surface à analyser et le déplacement de cette pointe permet une mesure topographique sur toute la zone de déplacement de la pointe P. Avantageusement, ceci est particulièrement bien adapté pour mesurer les propriétés topographiques d'une surface dure même si, dans la mesure où ce déplacement est limité, il peut également être envisagé pour certaines surfaces molles.

Cela permet d'obtenir plus d'informations sur la topographie, et d'accélérer la prise de mesures.

Afin de valider le fonctionnement et le caractère non destructif du procédé de commande décrit ci-dessus, plusieurs types de matériaux ont été analysés par microscopie MFA dans le cadre de mesures topographiques et quantitatives, de type électrique, thermique et mécanique.

Les analyses effectuées ont été réalisées à l'aide d'une pointe ayant une constante de raideur d'environ 3 nanomètres par mètre et une fréquence de résonance de 70 kilohertz. La pointe est recouverte d'un matériau conducteur comprenant de l'iridium-platine (Pt-Ir) pour assurer la caractérisation électrique des matériaux analysés. La hauteur de décollement de la pointe a été ajustée à 80 nanomètres.

Parmi les différents types d'échantillons utilisés, on peut citer :
- un premier échantillon constitué d'un matériau polymère, de type « souple » pour une mesure de topographie ;
- un deuxième échantillon constitué d'un matériau conducteur, dont les propriétés électriques sont connues, pour démontrer la corrélation des mesures électriques réalisées en mode « contact » et des mesures électriques réalisées en mode « saut » selon un mode de réalisation de l'invention ; et
- un troisième échantillon constitué d'un matériau conducteur, de type « souple », dont les propriétés électriques sont connues, pour démontrer le caractère non destructif du procédé lors d'une mesure de topographie et lors d'une mesure de type électrique.

La figure 4 représente la surface d'un premier échantillon souple, constitué de poly(méthacrylate de méthyle), et analysé à l'aide d'un microscope MFA.

Cette analyse comprend une mesure en mode « contact », une mesure en mode « intermittent », et une mesure en mode « saut » suivant le procédé et le dispositif selon l'invention.

Dans un premier temps, une mesure locale est réalisée en mode « contact » sur une surface Z1 de 20 microns par 20 microns du matériau.

A la fin de cette mesure en mode « contact », il est possible d'utiliser le microscope MFA pour constater un endommagement localisé de la surface Z1 due à un effet de friction entre la pointe et l'échantillon lors du balayage de la pointe.

En utilisant le microscope MFA en mode « intermittent », une image topographique de l'échantillon est ensuite enregistrée sur une surface Z2 autour de la zone Z1. L'image obtenue permet de confirmer que la mesure en mode « contact » a effectivement endommagé la zone Z1 comprise dans la zone Z2.

Suite à cette imagerie en mode « intermittent », une mesure locale est réalisée en mode « saut » sur une surface Z3 de l'échantillon en appliquant les étapes E1, E2, E3 et E4 du procédé de commande. La zone Z3 étant située à l'écart des surfaces Z1 et Z2.

Finalement, le microscope MFA est utilisé en mode « intermittent » pour enregistrer une image de résolution de 512 pixels par 512 pixels, avec une vitesse de balayage de 1 ligne par seconde, et comprenant l'ensemble des surfaces Z1, Z2 et Z3 de l'échantillon. L'image obtenue permet de constater qu'aucun dommage supplémentaire n'a été provoqué à l'échantillon lors de la mise en oeuvre du mode « saut » dans la surface Z2.

Les résultats confirment en outre la possibilité de réaliser plusieurs types de mesures lors d'une même analyse d'un échantillon, ces mesures n'endommageant pas l'échantillon au contraire du mode « contact », lorsque le mouvement de la pointe de ce microscope MFA est commandé à l'aide d'un procédé de commande selon un mode de réalisation de l'invention.

## Revendications

1. Procédé de commande d'une pointe (P) d'une sonde (S), dans lequel un signal de commande (SC), représentatif de la force appliquée par ladite pointe sur une surface d'un échantillon (E) à analyser, comporte au moins un cycle défini successivement par :
- une première étape (E1) où la valeur dudit signal de commande décroît depuis une valeur maximum (Smax) jusqu'à une valeur minimum (Smin) de sorte à éloigner ladite pointe de ladite surface jusqu'à une distance prédéterminée dite hauteur de décollement ;
- une deuxième étape (E2) où la valeur du signal de commande est maintenue constante à ladite valeur minimum de sorte à maintenir la pointe du à ladite hauteur de décollement ;
- une troisième étape (E3) où la valeur du signal de commande croît depuis la valeur minimum jusqu'à ladite valeur maximum de sorte à rapprocher la pointe de la surface à analyser jusqu'à la mise au contact de la pointe avec la surface ; et
- une quatrième étape (E4) où la valeur du signal de commande est maintenue constante à ladite valeur maximale de sorte à maintenir la pointe au contact de la surface à analyser avec une force constante entre la pointe et la surface à analyser ;
**caractérisé en ce que** le signal de commande étant contrôlé entre deux étapes qui se succèdent pour éviter toute oscillation de la pointe.

2. Procédé de commande selon la revendication 1, dans lequel la première étape du cycle comprend une première sous-étape (E11) d'accélération progressive au cours de laquelle le signal de commande imprime à la pointe une vitesse croissante, et une troisième sous-étape (E13) de décélération progressive au cours de laquelle le signal de commande imprime à la pointe une vitesse décroissante.

3. Procédé de commande selon la revendication 2, dans lequel la première étape du cycle comprend après la première sous-étape de la première étape du cycle et avant la troisième sous-étape de la première étape du cycle une deuxième sous-étape (E21) d'accélération nulle au cours de laquelle le signal de commande éloigne la pointe de l'échantillon avec une vitesse constante.

4. Procédé de commande selon l'une des revendications précédentes, dans lequel le signal de commande imprime à la pointe une vitesse non-nulle et inférieure à 400 micromètres par seconde au cours de la première étape du cycle.

5. Procédé de commande selon l'une des revendications précédentes, dans lequel la troisième étape du cycle comprend une première sous-étape (E31) d'accélération progressive au cours de laquelle le signal de commande imprime à la pointe une vitesse croissante et une troisième sous-étape (E33) de décélération progressive au cours de laquelle le signal de commande imprime à la pointe une vitesse décroissante.

6. Procédé de commande selon la revendication 5, dans lequel la troisième étape du cycle comprend après la première sous-étape de la troisième étape du cycle et avant la troisième sous-étape de la troisième étape du cycle une deuxième sous-étape (E21) d'accélération nulle au cours de laquelle le signal de commande rapproche la pointe de l'échantillon avec une vitesse constante.

7. Procédé de commande selon l'une des revendications précédentes, dans lequel le signal de commande imprime à la pointe une vitesse non-nulle et inférieure à 400 micromètres par seconde au cours de la troisième étape du cycle.

8. Procédé de commande selon l'une des revendications précédentes, dans lequel le signal de commande imprime à la pointe, au cours de l'une au moins des quatre étapes du cycle, un déplacement le long de la surface à analyser.

9. Procédé de commande selon l'une des revendications précédentes, dans lequel le signal de commande imprime à la pointe, au moins au cours de la deuxième étape du cycle, un déplacement le long de la surface à analyser.

10. Procédé de commande selon l'une des revendications précédentes, dans lequel un lissage du signal de commande entre les différentes étapes est réalisé par un filtre électronique.

## Patentansprüche

1. Steuerverfahren einer Spitze (P) einer Sonde (S), wobei ein Steuersignal (SC), das für die von der Spitze auf eine Oberfläche eines zu analysierenden Musters (E) angewendete Kraft repräsentativ ist, mindestens einen Zyklus umfasst, der sukzessiv definiert wird durch
- einen ersten Schritt (E1), bei dem der Wert des Steuersignals ausgehend von einem Maximalwert (Smax) bis zu einem Minimalwert (Smin) derart abnimmt, dass die Spitze von der Oberfläche bis zu einem vorbestimmten Abstand entfernt wird, der als Ablösungshöhe bezeichnet wird;
- einen zweiten Schritt (E2), bei dem der Wert des Steuersignals konstant am Minimalwert gehalten wird, sodass die Spitze an der Ablösungshöhe gehalten wird;
- einen dritten Schritt (E3), bei dem der Wert des Steuersignals ausgehend von dem Minimalwert bis zu dem Maximalwert derart zunimmt, dass die Spitze an die zu analysierende Oberfläche bis zum Kontaktieren der Spitze mit der Oberfläche angenähert wird; und
- einen vierten Schritt (E4), bei dem der Wert des Steuersignals konstant am Maximalwert gehalten wird, sodass die Spitze mit einer konstanten Kraft zwischen der Spitze und der zu analysierenden Oberfläche im Kontakt mit der zu analysierenden Oberfläche gehalten wird;
**dadurch gekennzeichnet, dass** das Steuersignal zwischen zwei Schritten gesteuert wird, die aufeinanderfolgen, um jegliche Oszillation der Spitze zu vermeiden.

2. Steuerverfahren nach Anspruch 1, wobei der erste Schritt des Zyklus einen ersten Teilschritt (E11) der allmählichen Beschleunigung, im Verlaufe dessen das Steuersignal der Spitze eine zunehmende Geschwindigkeit verleiht, und einen dritten Teilschritt (E13) der allmählichen Verlangsamung umfasst, im Verlaufe dessen das Steuersignal der Spitze eine abnehmende Geschwindigkeit verleiht.

3. Steuerverfahren nach Anspruch 2, wobei der erste Schritt des Zyklus nach dem ersten Teilschritt des ersten Schritts des Zyklus und vor dem dritten Teilschritt des ersten Schritts des Zyklus einen zweiten Teilschritt (E21) einer Beschleunigung von null umfasst, im Verlaufe dessen das Steuersignal die Spitze mit einer konstanten Geschwindigkeit von dem Muster entfernt.

4. Steuerverfahren nach einem der vorstehenden Ansprüche, wobei das Steuersignal im Verlaufe des ersten Schritts des Zyklus der Spitze eine Geschwindigkeit ungleich null und kleiner als 400 Mikrometer pro Sekunde verleiht.

5. Steuerverfahren nach einem der vorstehenden Ansprüche, wobei der dritte Schritt des Zyklus einen ersten Teilschritt (E31) der allmählichen Beschleunigung, im Verlaufe dessen das Steuersignal der Spitze eine zunehmende Geschwindigkeit verleiht, und einen dritten Teilschritt (E33) der allmählichen Verlangsamung umfasst, im Verlaufe dessen das Steuersignal der Spitze eine abnehmende Geschwindigkeit verleiht.

6. Steuerverfahren nach Anspruch 5, wobei der dritte Schritt des Zyklus nach dem ersten Teilschritt des dritten Schritts des Zyklus und vor dem dritten Teilschritt des dritten Schritts des Zyklus einen zweiten Teilschritt (E21) einer Beschleunigung von null umfasst, im Verlaufe dessen das Steuersignal die Spitze mit einer konstanten Geschwindigkeit an das Muster annähert.

7. Steuerverfahren nach einem der vorstehenden Ansprüche, wobei das Steuersignal im Verlaufe des dritten Schritts des Zyklus der Spitze eine Geschwindigkeit ungleich null und kleiner als 400 Mikrometer pro Sekunde verleiht.

8. Steuerverfahren nach einem der vorstehenden Ansprüche, wobei das Steuersignal im Verlaufe eines der mindestens vier Schritte des Zyklus der Spitze eine Verschiebung entlang der zu analysierenden Oberfläche verleiht.

9. Steuerverfahren nach einem der vorstehenden Ansprüche, wobei das Steuersignal mindestens im Verlaufe des zweiten Schritts des Zyklus der Spitze eine Verschiebung entlang der zu analysierenden Oberfläche verleiht.

10. Steuerverfahren nach einem der vorstehenden Ansprüche, wobei eine Glättung des Steuersignals zwischen den unterschiedlichen Schritten durch einen elektronischen Filter durchgeführt wird.

## Claims

1. Method for commanding a tip (P) of a probe (S), wherein the command signal (SC), representative of the force applied by said tip on the surface of a sample (E) to be analysed, comprises at least one cycle successively defined by:
- a first step (E1) where the value of said command signal decreases from a maximum value (Smax) to a minimum value (Smin) so as to move said tip away from said surface at a predetermined distance called detachment height;
- a second step (E2) where the value of the command signal is maintained constant at said minimum value so as to maintain the tip at said detachment height;
- a third step (E3) where the value of the command signal increases from a minimum value up to said maximum value so as to bring the tip towards the surface to be analysed until the tip comes into contact with the surface; and
- a fourth step (E4) where the value of the command signal is maintained constant at said maximum value so as to maintain the tip in contact with the surface to be analysed under a constant force between the tip and the surface to be analysed;
**characterized in that** the command signal being controlled between two successive steps to prevent any oscillation of the tip.

2. Command method according to claim 1, wherein the first step of the cycle comprises a first sub-step (E11) of progressive acceleration during which the command signal implements an increasing tip speed, and a third sub-step (E13) of progressive deceleration during which the command signal implements a decreasing tip speed.

3. Command method according to claim 2, wherein the first step of the cycle comprises after the first sub-step of the first step of the cycle and before the third sub-step of the first step of the cycle, a second sub-step (E21) of zero acceleration during which the command signal moves the tip away from the sample at a constant speed.

4. Command method according to one of the preceding claims, wherein the command signal implements to the tip a non-zero speed of less than 400 micrometres per second during the first step of the cycle.

5. Command method according to one of the preceding claims, wherein the third step of the cycle comprises a first sub-step (E31) of progressive acceleration during which the command signal implements to the tip an increasing speed, and a third sub-step (E33) of progressive deceleration during which the command signal implements to the tip a decreasing speed.

6. Command method according to claim 5, wherein the third step of the cycle comprises after the first sub-step of the third step of the cycle and before the third sub-step of the third step of the cycle, a second sub-step (E21) of zero acceleration during which the command signal brings the tip closer to the sample at a constant speed.

7. Command method according to one of the preceding claims, wherein the command signal implements to the tip a non-zero speed of less than 400 micrometres per second during the third step of the cycle.

8. Command method according to one of the preceding claims, wherein the command signal implements to the tip, during at least one of the four steps of the cycle, a displacement along the surface to be analysed.

9. Command method according to one of the preceding claims, wherein the command signal implements to the tip, during at least the second step of the cycle, a displacement along the surface to be analysed.

10. Command method according to one of the preceding claims, wherein a smoothing of the command signal between the different steps is achieved by means of an electronic filter.
